# EUROPEAN PATENT SPECIFICATION

(11) **EP 0 745 803 B1**
(45) Date of publication and mention of the grant of the patent: **21.11.2001**
(21) Application number: 96201533.5
(22) Date of filing: 03.06.1996
(51) Int. Cl.: F16L 55/027, F16L 55/033

(54) **Noise damper in combination with a screw-type compressor and use in a coke oven gas plant**
Schalldämpfer in Verbindung mit einerm Schraubenkompressor und Verwendung in einer Kokerei
Amortisseur de bruit d'un compresseur à vis et utilisation dans fours à coke

(30) Priority: 02.06.1995 NL 1000492
(43) Date of publication of application: 04.12.1996
(73) Proprietor: QE INTERNATIONAL B.V., 2410 AC Bodegraven (NL)
(72) Inventor: Choyce, Alan Brian, 2411 TD Bodegraven (NL)
(74) Representative: de Bruijn, Leendert C.

(56) References cited:
- BE-A- 672 893
- FR-A- 2 083 112
- US-A- 3 545 492
- US-A- 4 150 696

## Description

The present invention relates to an assembly according to the preamble of claim 1. Such an assembly is known from US-A-5.507.151.

Devices comprising a tubular channel having a baffle which extends over the entire cross-section and in which one large passage is formed are known in the form of flow restrictors for lowering the pressure in a conveyed fluid.

Noise dampers for damping noise in a fluid being conveyed through a tubular channel are also generally known. For example, it is known to use sand beds through which the channel is guided, claddings provided on the outside of the tubular channel, and noise-absorbing means which are provided in a channel and through which or along which the conveyed fluid is guided.

The object of the present invention is to provide an assembly according to the preamble of claim 1, having a noise damper which is easy to use in existing systems. A further object of the invention is to provide such an assembly having a noise damper which is particularly suitable for use in the case of large volume flows and large surface areas of the throughflow cross-section. Another object of the invention is to provide such an assembly having an improved noise damper.

For this purpose, the invention provides an assembly according to the features of the characterising clause of claim 1.

The large number of longitudinal passages in this case provides a relatively large total throughflow surface area, while the throughflow surface area of each individual longitudinal passage is relatively small. The frequency of noise which can be damped increases as the surface area of a longitudinal passage decreases. The frequency range of the noise damping is increased as a result. After the fluid has passed through the longitudinal passages, it will expand downstream of the baffle, in particular when the fluid is partially or largely gaseous. During this expansion, fluid flows which have passed through adjacent longitudinal passages will collide with each other, as a result of which a noise-damping action occurs. The closer to each other the longitudinal passages are situated, the better this action will become.

In order to be able to estimate the strength of the baffle during the designing of the baffle and to facilitate the manufacture of the baffle, it is advantageous according to the invention if the longitudinal passages are provided in a regular pattern. A pattern by means of which a high density of longitudinal passages can be achieved, on the one hand, and which is suitable for use in the case of tubular channels with differing cross-section shapes, on the other, is a triangular pattern of identical, preferably equilateral triangles, in which the longitudinal passages are situated on the vertices of the triangles.

In order to prevent accumulation of fluid upstream of the baffle in the case of baffles provided in channels running horizontally or obliquely, it is advantageous according to the invention if the longitudinal passages are provided almost up to the inside wall of the channel.

Noise damping up to high frequencies can be achieved according to the invention if the longitudinal passages have a maximum diameter of 20 to 25 mm, for example a diameter of approximately 15 mm. In the case of largely gaseous fluids this means that noise damping up to 8,000 (eight thousand) Hz can be achieved.

The noise damping can be improved further according to the invention if a reflection space, in which noise reflected by the baffle is utilized for damping noise carried along by inflowing fluid, is provided at the upstream side of the baffle.

The reflection space in this case is preferably a chamber bounded by the walls of the channel, the baffle and a further, similar baffle provided upstream. The further, similar baffle provided upstream can be an identical baffle, but it can also have different dimensions, or a different pattern of longitudinal passages, or longitudinal passages of different dimensions. The size of the chamber can be determined depending on the circumstances. The size will depend, inter alia, on the composition of the conveyed fluid, the noise frequencies present in the fluid, the noise frequencies to be damped, the pressure, the temperature, the rate of conveyance of the fluid etc.

The noise damping action can be improved further according to the invention if the noise damper comprises a number of damping steps, and a baffle provided with a large number of longitudinal passages is present for each step, the baffles being placed at a distance from each other, viewed in the lengthwise direction of the channel. Reflection spaces or reflection chambers of specific sizes can then be formed between successive baffles.

In order to tackle the occurrence of noise as near as possible to the source, it is advantageous according to the invention if the sole or first baffle, viewed in the upstream direction, is provided between the outlet of a fluid conveyance device, such as a screw-type compressor, and the beginning of the channel.

The invention can be used advantageously on, and therefore also relates to, a coke oven gas plant or coke gas plant provided with an assembly according to the invention. In particular, the invention relates here to a coke oven gas plant or coke gas plant in which the noise damper is connected to the outlet of a screw-type compressor, the screw-type compressor being provided with water injection means, and at least one baffle of the noise damper being provided in an essentially horizontal part of the channel. In the case of such a screw-type compressor water is injected into the coke oven gas, in order to keep the compressor free of dirt, or to clear it of dirt present in the coke oven gas or coke gas. Some of this water evaporates, and some is carried along in the form of droplets. The result of this is that the coke oven gas or coke gas is supersaturated and dripping wet. Due to the fact that the pattern of holes in the baffle extends almost to the inside wall of the channel, water is prevented from accumulating in the horizontal part of the channel upstream of the baffle. When such a coke oven gas plant or coke gas plant is started up, great shock waves occur and are propagated through the plant as a result of accumulated water being set in motion. This can lead to great damage.

Where coke oven gas is mentioned here, this also includes coke gas, and where there is mention here of a coke oven gas plant, this likewise includes a coke gas plant.

The invention will be explained in greater detail below with reference to the drawing, in which:

Fig. 1 shows a diagrammatic view of a noise damper according to the invention, for example for use in a coke oven gas plant;

Fig. 2 shows a diagrammatic view of another embodiment of a noise damper according to the invention; and

Fig. 3 shows a diagrammatic top view of a baffle for a noise damper according to the invention.

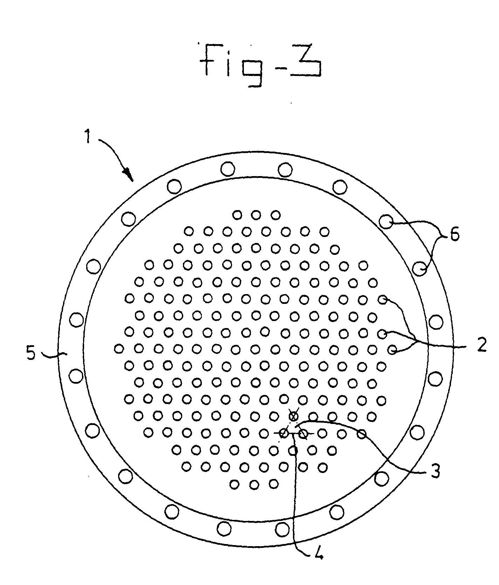

Fig. 3 shows a baffle 1 for a noise damper according to the invention, which baffle can be placed in a round tubular channel. The baffle 1 is provided with a large number of longitudinal passages 2, provided in a triangular pattern of identical equilateral triangles 3. The longitudinal passages here are provided on the vertices of the triangles 3. On the periphery, the baffle 1 is provided with a peripheral edge 5 containing bolt holes 6. This baffle 1 can be provided between two tubular parts to be fixed to each other by means of flanges. The flange bolts by means of which the flanges are fixed to each other then extend through the bolt holes 6.

What is meant here by a large number of longitudinal passages is that, taking into account a number of design requirements, such as in particular:
- the baffle must be so strong that it can readily withstand in particular mechanical vibrations, which implies a certain thickness of the baffle in the lengthwise direction of the channel (i.e. perpendicular to the plane of the drawing in Fig. 3), and a certain minimum distance between the longitudinal passages depending on the material properties of the baffle;
- providing the very lowest possible flow resistance, and thus the greatest possible total throughflow surface area of all longitudinal passages together;
- damping noise to, preferably, the very highest possible frequencies;
- being able to provide the longitudinal passages in the baffle in the simplest possible way;
the number of longitudinal passages in the part of the baffle which will be situated in the tubular channel is essentially as high as possible.

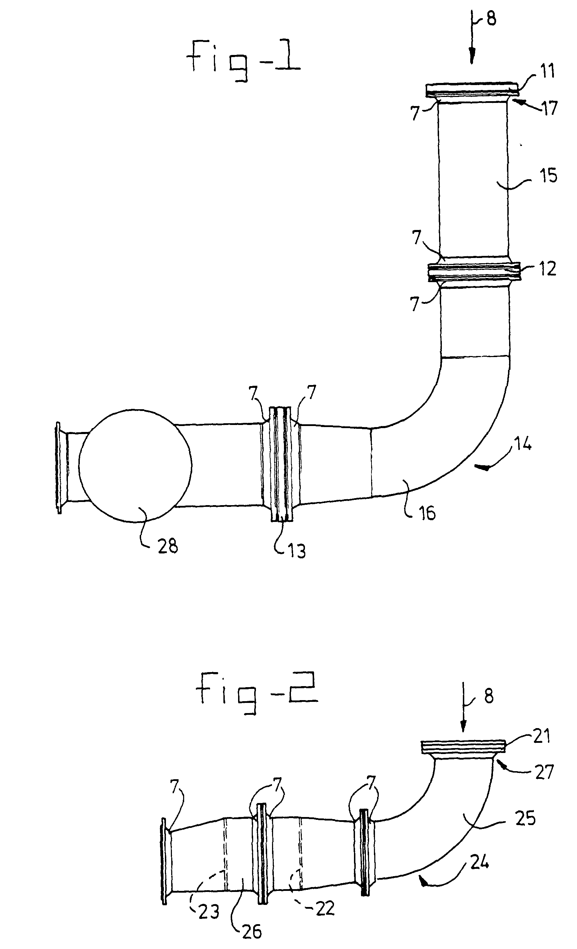

Fig. 1 shows an embodiment of a noise damper according to the invention. Said noise damper consists of a tubular channel 14 and three baffles 11, 12 and 13 provided with a large number of longitudinal passages. Said baffles 11, 12 and 13 need by no means be identical here. They can have differing dimensions, or differing patterns of longitudinal passages, or longitudinal passages of different sizes. In this case baffles 11 and 12 are identical, and baffle 13 is larger. The shape of the baffles 11, 12 and 13 is essentially the same as that of baffle 1 from Fig. 3. The pattern of the longitudinal passages in baffle 13, on the one hand, and the longitudinal passages in baffles 11 and 12, on the other, is identical, and the diameters of the longitudinal passages in baffles 11 and 12 are also identical. However, the sides 4 of the equilateral triangle 3 in the case of baffle 13 are larger than the sides 4 of the equilateral triangles in the case of baffles 11 and 12. In other words, the distances between the longitudinal passages of baffle 13 are greater than those between the longitudinal passages of baffles 11 and 12. By this it is effectuated that, despite the greater diameter of baffle 13, the flow conditions in the case of the baffles 11, 12 and 13 are otherwise largely identical.

Situated between baffles 11 and 12 is a reflection space or reflection chamber 15, bounded by the peripheral walls of the channel 14 and the baffles 11 and 12. Situated between the baffles 13 and 12 is a reflection space or reflection chamber 16, bounded by the peripheral walls of the channel 14, the baffle 13 and baffle 12. The difference between the reflection spaces 15 and 16 is that reflection space 16 comprises a bend-shaped part of the channel 14, but reflection space 16, like reflection space 15, can also be provided in a straight part of the channel. The bend part 16 was introduced more for design reasons, which require the channel 14 to make a bend. The channel 14 is made up of tubular parts having at the ends flanges 7 which are fixed to each other in the usual manner by means of bolts.

The noise damper, as shown in Fig. 1, can be used in particular in a coke oven gas plant. The direction of flow of the coke oven gas is indicated here by arrow 8. The noise damper according to the invention can be connected here, at starting point 17 of the tubular channel 14, directly to the outlet of a so-called screw-type compressor. Such a screw-type compressor (not shown) produces a pulsating stream of coke oven gas with a high noise level. Since the coke oven gas contains a large amount of dirt, large quantities of water are injected into it, in order to keep the screw-type compressor clean. The consequently saturated and dripping wet coke oven gas is conveyed directly through the first baffle 11 at the outlet of the compressor, for a first noise damping step. As the result of expansion of the wet coke oven gas after it has passed through the longitudinal passages of baffle 11, the noise carried along by the coke oven gas is reduced in level. At a distance from the first baffle 11, a second, identical baffle 12 is provided downstream thereof. A reflection chamber is formed between these baffles. The effect of this reflection chamber is based on the fact that some of the fluid carried along by the coke oven gas is reflected when it collides with the baffle 12, and can then damp noise present in the inflowing fluid. On passage of the stream through baffle 12, damping of the noise present therein occurs in a corresponding manner to that of baffle 11, as the result of the coke oven gas expanding after baffle 12 and consequently the collision with each other of streams of coke oven gas which have passed through adjacent longitudinal passages. A third baffle 13 is provided further downstream of the second baffle 12, in which case a reflection chamber 16, comparable to the reflection chamber 15 is formed between the baffles 12 and 13. Due to the fact that the pattern of longitudinal passages in baffle 13 extends almost to the inside walls of the channel 14, water which has precipitated from the stream of coke oven gas is prevented from collecting upstream of baffle 13. A device 28 for separating water out of the stream of coke oven gas is provided downstream of baffle 13.

A further noise damping effect occurs through the fact that, as a result of the noise, the conveyed fluid undergoes a to and fro movement in the lengthwise direction of the longitudinal passages while it is passing through the longitudinal passages. If the longitudinal passages are sufficiently long, the flow resistance in the longitudinal passages will have a noise-damping effect here. The thickness of the baffle required for reasons of strength, in order to ensure that the baffle itself does not begin to vibrate, is generally greater than the minimum length of the longitudinal passages required for the noise-damping effect.

By way of example, the following indicative values can be given for a noise damper according to Fig. 1 intended for a coke oven gas plant:
Baffle 11 and baffle 12:
- diameter of longitudinal passages 15 mm;
- length of longitudinal passages 60 mm, i.e. thickness of the baffle in the lengthwise direction of the channel is 60 mm;
- length of each side 4 of a triangle 3 is 33.13 mm;
- internal diameter of the tubular channel approximately 585 mm.
Baffle 13:
- diameter of longitudinal passages 15 mm;
- length of longitudinal passages 60 mm, i.e. thickness of the baffle in the lengthwise direction of the channel is 60 mm;
- length of each side 4 of a triangle 3 is 40.71 mm;
- internal diameter of the tubular channel approximately 685 mm.
Distance between baffle 11 and baffle 12 is approximately 1,260 mm. Distance measured along channel axis between baffle 12 and baffle 13: approximately 2,600 mm.
Positioning of baffle 11: directly on the outlet of a screw-type compressor with an output of 12,400 m³ per hour.

Figure 2 shows diagrammatically a further embodiment of the noise damper according to the invention. At the beginning 27 of the tubular channel 24, a baffle 21 provided with a large number of longitudinal passages is provided between a flange 7 of the channel 24 and a flange 7 of a line or device (not shown in any further detail) placed upstream thereof. Going further downstream from baffle 21, there is a reflection space 25 which is formed by the bend and downstream of the flange connection by a straight part, and which at its downstream end is bounded by a second baffle 22. Baffle 22 is fitted in a straight tubular piece which is provided with fixing flanges 7 at both ends. Fixed at the downstream end of said straight tubular piece is a further straight tubular piece, in which a third flange 23 having a large number of longitudinal passages is provided. This further straight tubular piece is also provided with fixing flanges 7 at both its ends. The noise damper according to the embodiment shown in Fig. 2 works in essentially the same way as the embodiment shown in Fig. 1. This noise damper can in principle also be used in a coke oven gas plant.

It will be clear that the noise damper according to the invention, such as, for example, the three-step noise damper according to Figs. 1 and 2, can also be used in plants other than a coke oven gas plant. The dimensioning of in particular the baffles and also the reflection spaces will in this case largely depend on the fluid to be conveyed, the noise frequencies to be damped, the rate of conveyance of the fluid to be conveyed, permitted pressure losses, and many other parameters. Good dimensioning of the baffles and reflection spaces will generally in this case be an iterative process, in which the relative importance of the various parameters must always be weighed up.

## Claims

1. Assembly comprising a tubular channel (14;24), a screw-type compressor for conveying a fluid and a noise damper for damping noise in the fluid being conveyed through the tubular channel (14;24), **characterized in that** the noise damper comprises at least one baffle (1;11,12,13;21,22,23) extending over the entire cross-section of the channel, **in that** the baffle (1;11,12,13;21,22,23) is provided with a large number of longitudinal passages (2) extending in the lengthwise direction of the channel (14;24), **in that** the longitudinal passages (2) are distributed over essentially the entire cross-section of the channel (14;24), and **in that** the sole or first baffle (11;21), viewed in the direction of flow, is provided between the outlet of the screw-type compressor and the beginning (17;27) of the channel.

2. Assembly according to claim 1, **characterized in that** the longitudinal passages (2) are provided in a regular pattern.

3. Assembly according to claim 2, **characterized in that** the regular pattern is a triangular pattern of identical, preferably equilateral triangles (3), in which the longitudinal passages (2) are situated on the verticles of the triangles (3).

4. Assembly according to one of the preceding claims, **characterized in that** the longitudinal passages (2) are provided almost up to the inside of the wall of the channel (14 ; 24 ) , in such a way that accumulation of fluid at the upstream side of the baffle (1;11,12,13;21,22,23) is essentially prevented.

5. Assembly according to one of the preceding claims, **characterized in that** the longitudinal passages (2) have a maximum diameter of 20 to 25 mm, for example a diameter of approximately 15 mm.

6. Assembly according to one of the preceding claims, **characterized in that** at the upstream side of the baffle (12,13;22,23) the channel (14;24) provides a reflection space (15,16;25,26 respectively) in which noise reflected by the baffle is utilized for damping noise carried along by inflowing fluid.

7. Assembly according to claim 6, **characterized in that** the reflection space (15,16;25,26) is a chamber bounded by the walls of the channel (14;24 respectively), the baffle (12,13;22,23 respectively) and a further, similar baffle (11,12;21,22 respectively) provided upstream.

8. Assembly according to one of the preceding claims, **characterized in that** said damper comprises a number of damping steps, and a baffle (1;11,12,13;21,22,23) provided with a large number of longitudinal passages is present for each step, the baffles being placed at a distance from each other, viewed in the lengthwise direction of the channel (14;24).

9. Assembly according to one of the preceding claims, **characterized in that** the noise damper is connected directly to the outlet of the screw-type compressor.

10. Coke oven gas plant provided with an assembly according to one of the preceding claims.

11. Coke oven gas plant according to claim 10, in which the screw-type compressor is provided with water injection means, and in which at least one of said baffles of the noise damper is provided in an essentially horizontal part of the channel.

12. Coke oven gas plant according to claim 11, in which the noise damper is connected to the outlet of the screw-type compressor.

## Patentansprüche

1. Aufbau, umfassend einen röhrenförmigen Kanal (14;24), einen Schraubenkompressor zum Fördern eines Fluids und einen Schalldämpfer zum Dämpfen des Schalls in dem durch den röhrenförmigen Kanal (14; 24) geförderten Fluid, **dadurch gekennzeichnet, dass** der Schalldämpfer wenigstens eine Schallwand (1; 11, 12, 13; 21, 22, 23) umfasst, die sich über den gesamten Querschnitt des Kanals erstreckt, sowie dadurch, dass die Schallwand (1; 11, 12, 13; 21, 22, 23) mit einer großen Anzahl länglicher Durchgänge (2) versehen ist, die sich in der Längsrichtung des Kanals (14; 24) erstrecken, sowie dadurch, dass die länglichen Durchgänge (2) über im Wesentlichen den gesamten Querschnitt des Kanals (14; 24) verteilt sind, und dadurch, dass die, in Flussrichtung betrachtet, Basis-Schallwand oder erste Schallwand (11; 21) zwischen dem Auslass des Schraubenkompressors und dem Beginn (17; 27) des Kanals bereitgestellt ist.

2. Aufbau nach Anspruch 1, **dadurch gekennzeichnet, dass** die länglichen Durchgänge (2) in einem regelmäßigen Muster bereitgestellt sind.

3. Aufbau nach Anspruch 2, **dadurch gekennzeichnet, dass** das regelmäßige Muster ein Dreiecksmuster identischer, vorzugsweise gleichseitiger Dreiecke (3) ist, bei welchen die länglichen Durchgänge (2) auf den Spitzen der Dreiecke (3) angeordnet sind.

4. Aufbau nach einem der vorstehenden Ansprüche, **dadurch gekennzeichnet, dass** die länglichen Durchgänge (2) fast bis zur Innenseite der Wand des Kanals (14; 24) bereitgestellt sind, und zwar derart, dass die Ansammlung von Fluid an der Stromaufwärtsseite der Schallwand (1; 11, 12, 13; 21, 22, 23) im Wesentlichen verhindert wird.

5. Aufbau nach einem der vorstehenden Ansprüche, **dadurch gekennzeichnet, dass** die länglichen Durchgänge (2) einen maximalen Durchmesser von 20 bis 25 mm aufweisen, beispielsweise einen Durchmesser von ungefähr 15 mm.

6. Aufbau nach einem der vorstehenden Ansprüche, **dadurch gekennzeichnet, dass** die Stromaufwärtsseite der Schallwand (12, 13; 22, 23) des Kanals (14; 24) einen Reflexionsraum (15, 16; 25, 26) bereitstellt, in welchem der durch die Schallwand reflektierte Schall zum Dämpfen des von dem einströmenden Fluid mitgeführten Schalls verwendet wird.

7. Aufbau nach Anspruch 6, **dadurch gekennzeichnet, dass** der Reflexionsraum (15, 16; 25, 26) eine Kammer ist, die durch die Wände des Kanals (14; 24), die Schallwand (12, 13; 22, 23) und eine weitere, stromaufwärts bereitgestellte ähnliche Schallwand (11, 12; 21, 22) begrenzt wird.

8. Aufbau nach einem der vorstehenden Ansprüche, **dadurch gekennzeichnet, dass** der Dämpfer eine Anzahl von Dämpfungsstufen umfasst, und dass eine Schallwand (1; 11, 12, 13; 21, 22, 23), die mit einer großen Anzahl länglicher Durchgänge versehen ist, für jede Stufe vorliegt, wobei die Schallwände, bei einer Betrachtung in Längsrichtung des Kanals (14; 24), voneinander beabstandet angeordnet sind.

9. Aufbau nach einem der vorstehenden Ansprüche, **dadurch gekennzeichnet, dass** der Schalldämpfer mit dem Auslass des Schraubenkompressors direkt verbunden ist.

10. Kokereigasanlage, die mit einem Aufbau nach einem der vorstehenden Ansprüche bereitgestellt ist.

11. Kokereigasanlage nach Anspruch 10, bei welcher der Schraubenkompressor mit Wassereinspritzmitteln bereitgestellt ist, und bei welcher wenigstens eine der Schallwände des Schalldämpfers in einem im Wesentlichen horizontalen Teil des Kanals bereitgestellt ist.

12. Kokereigasanlage nach Anspruch 11, bei welcher der Schalldämpfer mit dem Auslass des Schraubenkompressors verbunden ist.

## Revendications

1. Ensemble comprenant un conduit tubulaire (14 ; 24), un compresseur du type à vis destiné à transporter un fluide et un amortisseur de bruit destiné à amortir le bruit engendré par le fluide qui est transporté dans le conduit tubulaire (14 ; 24), **caractérisé en ce que** l'amortisseur de bruit comprend au moins un écran (1 ; 11, 12, 13 ; 21, 22, 23) qui s'étend sur toute la section transversale du conduit, **en ce que** l'écran (1 ; 11, 12, 13 ; 21, 22, 23) est muni d'un grand nombre de passages longitudinaux (2) qui s'étendent dans la direction longitudinale du conduit (14; 24), **en ce que** les passages longitudinaux (2) sont distribués sensiblement sur toute la section transversale du conduit (14 ; 24) ; et **en ce que** l'écran unique ou le premier écran (11 ; 21), vu dans le sens de l'écoulement est prévu entre la sortie du compresseur du type à vis et le début (17 ; 27) du conduit.

2. Ensemble selon la revendication 1, **caractérisé en ce que** les passages longitudinaux (2) sont prévus selon un motif régulier.

3. Ensemble selon la revendication 2, **caractérisé en ce que** le motif régulier est un motif triangulaire de triangles identiques (3), de préférence équilatéraux, dans lequel les passages longitudinaux (2) sont situés aux sommets des triangles (3).

4. Ensemble selon une des revendications précédentes, **caractérisé en ce que** les passages longitudinaux (2) sont prévus presque jusqu'à la surface interne de la paroi du conduit (14 ; 24), de manière à éviter sensiblement que le fluide ne s'accumule sur le côté amont de l'écran (1 ; 11, 12, 13 ; 21, 22, 23).

5. Ensemble selon une des revendications précédentes, **caractérisé en ce que** les passages longitudinaux (2) ont un diamètre maximum de 20 à 25 mm, par exemple un diamètre d'environ 15 mm.

6. Ensemble selon une des revendications précédentes, **caractérisé en ce que**, sur le côté amont de l'écran (12, 13 ; 22, 23), le conduit (14 ; 24) forme un espace de réflexion (15, 16 ; 25, 26 respectivement) dans lequel le bruit réfléchi par l'écran est utilisé pour amortir le bruit transporté par le fluide affluent.

7. Ensemble selon la revendication 6, **caractérisé en ce que** l'espace de réflexion (15, 16 ; 25, 26) est une chambre limitée par les parois du conduit (14 ; 24 respectivement), par l'écran (12, 13 ; 22, 23 respectivement) et par un autre écran analogue (11,12 ; 21, 22) prévu en amont.

8. Ensemble selon une des revendications précédentes, **caractérisé en ce que** ledit amortisseur comprend un certain nombre de phases d'amortissement et un écran (1 ; 11, 12, 13 ; 21, 22, 23) muni d'un grand nombre de passages longitudinaux est présent pour chaque phase, les écrans étant placés à distance l'un de l'autre, vu dans la direction longitudinale du conduit (14; 24).

9. Ensemble selon une des revendications précédentes, **caractérisé en ce que** l'amortisseur de bruit est relié directement à la sortie du compresseur du type à vis.

10. Installation de gaz de four à coke équipé d'un ensemble selon une des revendications précédentes.

11. Installation de gaz de four à coke selon la revendication 10, dans laquelle le compresseur du type à vis est équipé de moyens d'injection d'eau et dans laquelle au moins un desdits écrans de l'amortisseur de bruit est prévu dans une partie sensiblement horizontale du conduit.

12. Installation de gaz de four à coke selon la revendication 11, dans laquelle l'amortisseur de bruit est relié à la sortie du compresseur du type à vis.
